# EUROPÄISCHE PATENTSCHRIFT

(11) **EP 1 183 690 B1**
(45) Veröffentlichungstag und Bekanntmachung des Hinweises auf die Patenterteilung: **04.12.2002**
(21) Anmeldenummer: 00931196.0
(22) Anmeldetag: 11.05.2000
(51) Int. Cl.: G11C 8/00

(54) **SPEICHERANORDNUNG MIT ADRESSVERWÜRFELUNG**
MEMORY ARRAY WITH ADDRESS SCRAMBLING
ENSEMBLE MEMOIRE AVEC HACHAGE DES ADRESSES

(30) Priorität: 12.05.1999 DE 19922155
(43) Veröffentlichungstag der Anmeldung: 06.03.2002
(73) Patentinhaber: Giesecke & Devrient GmbH, 81677 München (DE)
(72) Erfinder: BALDISCHWEILER, Michael, D-81929 München (DE); ECKARDT, Stefan, D-81739 München (DE)
(74) Vertreter: Klunker . Schmitt-Nilson . Hirsch
(86) Internationale Anmeldenummer: EP0004285
(87) Internationale Veröffentlichungsnummer: WO00070620

(56) Entgegenhaltungen:
- US-A- 5 081 675
- US-A- 5 748 641
- US-A- 5 765 197
- US-A- 5 787 498
- US-A- 5 850 452
- US-A- 5 943 283

## Beschreibung

Die Erfindung geht aus von einer Speicheranordnung nach der Gattung des Hauptanspruchs. Speicheranordnungen dieser Art sind Bestandteil aller gängigen Mikrocomputer und u.a. in "Chip und System" R. Zaks, SYBEX-Verlag, 1984, Seite 133 ff. beschrieben. Grundsätzlich gleichartige Mikrocomputer werden auch in sicherheitsrelevanten Anwendungen, etwa in Chipkartensystemen zur Durchführung von Finanztransaktionen, eingesetzt. Allerdings werden in diesen Fällen regelmäßig zusätzliche Maßnahmen ergriffen, um Angriffe auf die Sicherheit durch Manipulation des Mikrocomputers zu verhindern. Ein Beispiel für eine solche Maßnahme findet sich in "Chipkarten", Karlheinz Fietta, Hüthig Verlag, 1989, Seiten 68 bis 72. Bei dem darin beschriebenen Chip TS 1834 der Firma THOMSON sind der Adreßund Datenbus mittels eines Interfaces nach außen hin unsichtbar gemacht. Eine andere Maßnahme zur Erhöhung der Manipulationssicherheit des Mikrocomputers ist aus EP 694 846 A1 entnehmbar. Danach ist vorgesehen, die über den Datenbus übertragenen Daten gegebenenfalls mehrfach zu verwürfeln, so daß eine Auswertung und damit eine Manipulation der Daten selbst dann nicht möglich ist, wenn es gelingt sie auszulesen.

Aus der US 5 081 675 ist eine Speicheranordnung und ein Verfahren gemäß den Oberbegriffen der Ansprüche 1 und 7 bekannt.

Obgleich bereits die bekannten Maßnahmen ein hohes Maß an Sicherheit gewährleisten, ist es mit Blick auf die besondere Bedeutung der Sicherheit von im Zusammenhang mit der Ausführung von Finanztransaktionen eingesetzten Mikrocomputern wünschenswert, deren Manipulationssicherheit weiter zu verbessern. Der Erfindung liegt die Aufgabe zugrunde, weitere dieses leistende Maßnahmen anzugeben.

Die Aufgabe wird gelöst durch eine Anordnung sowie ein Verfahren mit den Merkmalen der unabhängigen Ansprüche 1 und 7. Erfindungsgemäß wird wenigstens einem im Mikrocomputer vorhandenen Speicher mit wahlfreiem Zugriff eine Verwürfelungseinrichtung vorgeschaltet, welche den über den Adreßbus übermittelten logischen Adressen in unvorhersehbarer Weise physikalisch darauf tatsächlich belegte Zellen im Speicher zuordnet. Die erfindungsgemäße Speicheranordnung bietet dadurch den Vorteil, daß eine Manipulation des Mikrocomputers durch Analyse der Inhalte der Speicherzellen des Speichers mit wahlfreiem Zugriff unmöglich wird. Die zur Realisierung der Verwürfelungseinrichtung benötigte Logik verbraucht wenig Platz und läßt sich ohne weiteres in laufende Mikrocomputerfertigungen einbeziehen. Bevorzugt wird die Verwürfelung auf definierte Ereignisse hin regelmäßig erneuert.

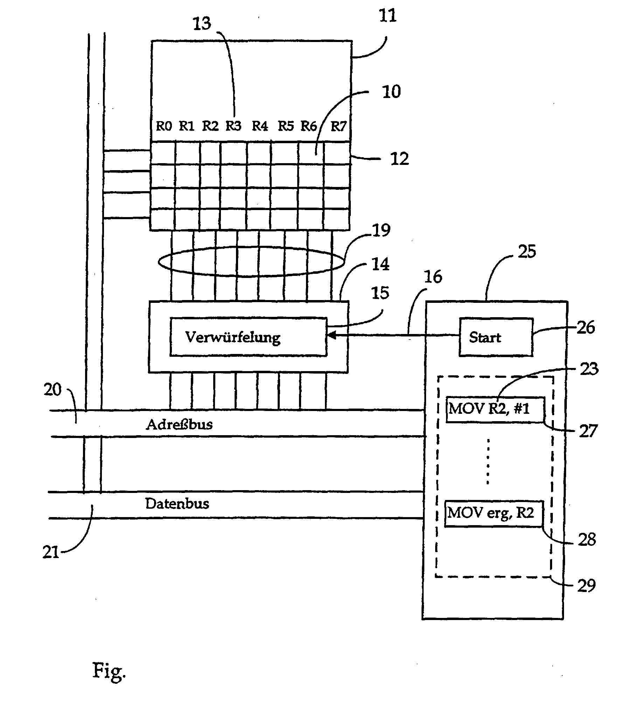

Unter Bezugnahme auf die Zeichnung wird nachfolgend ein Ausführungsbeispiel der Erfindung näher erläutert.

Die Figur zeigt eine Speicheranordnung eines Mikrocomputers.

Die Figur zeigt als Ausschnitt aus der Gesamtstruktur eines Mikrocomputers dessen Speicheranordnung. Bezugszahl 11 bezeichnet dabei einen Speicher mit wahlfreiem Zugriff, d.h. in der Regel einen flüchtigen oder zunehmend auch nichtflüchtigen RAM-Speicher, welcher in eine Vielzahl von Registerbänken 12 gegliedert sein kann. Jede Registerbank 12 gliedert sich ihrerseits in eine definierte Zahl von Speicherzellen 10, deren physikalische Position innerhalb einer Registerbank 12 jeweils durch eine zugeordnete Adresse 13 eindeutig bezeichnet ist. Jede Speicherzelle 10 speichert eine Information von einem Byte, eine Registerbank 12 beinhaltet üblicherweise acht Speicherzellen 10 oder ein ganzzahliges Vielfaches davon.

Der Speicher 11 ist über einen Datenbus 21 mit einem Mikrocontroller 25 verbunden. Dessen wesentliche Funktion ist die Ausführung von Programmbefehlen 26, 27, 28, welche in üblicher Weise in einer vorzugsweise nichtflüchtigen Speichereinrichtung abgelegt sind. Die Abarbeitung der Programmbefehle beinhaltet Schreib- und Lesezugriffe auf den Speicher 11. Über den Datenbus 21 erfolgt dabei der Transport der in die Registerbänke 12 einzuschreibenden bzw. auszulesenden Dateninhalte. Über eine zweite Busverbindung 19 ist der Speicher 11 weiterhin mit einer Auswahleinrichtung 14 verbunden. Sie ordnet den über den Datenbus 21 übertragenen Dateninhalten Speicherzellen 10 zu, in welche die Dateninhalte physikalisch abgelegt bzw. aus denen sie ausgelesen werden. Für die Zuordnung ist die Auswahleinrichtung 14 über einen zweiten Bus, den Adreßbus 20, ebenfalls mit dem Mikrocontroller 25 verbunden. Von ihm erhält die Auswahleinrichtung 14 in Form von logischen Adressen 23 über den Adreßbus 20 zu jedem Dateninhalt jeweils die Information, auf welche Speicherzelle 10 ein Zugriff erfolgen soll.

Die Auswahleinrichtung 14 beinhaltet weiterhin eine Verwürfelungseinrichtung 15. Diese ordnet den über den Adreßbus 20 zugeführten logischen Adressen 23 in unvorhersehbarer Weise Adressen 13 im Speicher 11 zu, auf die sodann tatsächlich physikalisch zugegriffen wird, d.h. die beschrieben bzw. ausgelesen werden. Die Zuordnung ist vorzugsweise jederzeit neu festlegbar. Zum Auslösen einer Neuzuordnung ist die Verwürfelungseinrichtung 15 über eine Steuerleitung 16 mit dem Mikrocontroller 25 verbunden.

Anhand einer beispielhaften Befehlssequenz wird im folgenden die Funktionsweise der vorbeschriebenen Anordnung erläutert. Die Befehlssequenz bestehe aus zwei, nicht notwendig unmittelbar aufeinanderfolgenden, Befehlen 27, 28, wovon der erste zunächst den Wert "1" in ein Register R2 legt und der zweite den Inhalt des Registers R2 zu einem späteren Zeitpunkt erneut aufruft, um ihn in ein "Ergebnisregister" genanntes Register zu schreiben.

Der erste Befehl 27 läßt sich symbolisch wie folgt darstellen: "MOV R2, #1"; darin steht "MOV" für die auszuführende Funktion Bewegen, R2 bezeichnet logisch die Adresse einer Speicherzelle 10 im Speicher 11, wohin der durch "#" gekennzeichnete Wert 1 gelegt werden soll. Die entsprechende symbolische Darstellung des zweiten Befehls 28 ist: "MOV erg, R2"; darin bezeichnet "MOV" wiederum die Funktion Bewegen, "erg" die logische Adresse 23 des Ergebnisregisters, R2 eine auszulesende Speicherzelle im Speicher 11. Die Befehlssequenz 27, 28 sei Teil eines Programmes bzw. einer nicht weiter dargestellten, umgreifenden Befehlsfolge 29, welche als Ganze z.B. zur Realisierung einer Funktion des Mikrocomputers oder einer durch den Mikrocomputer gesteuerten Einrichtung dient. Der Befehlsfolge 29 ist des weiteren ein Befehl 26 zum Starten einer Verwürfelung in der Auswahleinrichtung 14 vorangestellt. Dieser kann programmiert oder auch selbsttätig vom Mikrocontroller in Abhängigkeit von einem auslösenden Ereignis gebildet sein.

Bevor er mit der Ausführung der Befehlsfolge 29 beginnt, führt der Mikrocontroller 25 den Startbefehl 26 aus und bewirkt über die Steuerleitung 16 die Absetzung eines Signales zum Start der Verwürfelungseinrichtung 15. Das Startsignal löst in der Auswahleinrichtung 14 einen Verwürfelungsvorgang aus, durch welchen den über den Adreßbus 20 übertragenen logischen Adressen 23 physikalische Adressen im Speicher 11 zugeordnet werden. Zweckmäßig wird durch die Verwürfelung allen möglichen logischen Adressen 23 jeweils eine Adresse 13 im Speicher 11 zugeordnet. Die durch die Verwürfelung erhaltene Zuordnung wird für die nachfolgende Abarbeitung der Programmfolge 29 beibehalten, sie hat mithin auch für die Befehle 27, 28 Gültigkeit. Kommt somit der Befehl 27 zur Ausführung, übermittelt der Mikrocontroller 25 der Auswahleinrichtung 14 über den Adreßbus 20 die logische Adresse R2. Die Auswahleinrichtung 14 ermittelt hierauf die zugeordnete Speicherzelle 10 im Speicher 11. Es sei angenommen, daß die Verwürfelungseinrichtung 15 der logischen Adresse R2 im Speicher 11 physikalisch die Speicherzelle 10 mit der Adresse R5 zugeordnet habe. Die Auswahleinrichtung ermittelt daher als der logischen Adresse R2 zugeordnete Speicherzelle die Zelle 10 mit der Adresse R5 und schreibt darin den mit dem Befehl 27 übermittelten Dateninhalt, d.h. den Wert 1.

Kommt anschließend die Ausführung der Befehlsfolge 29 an den Befehl 18, übermittelt der Mikrocontroller 25 der Auswahleinrichtung 14 die logische Adresse 23 des Zielregisters, in diesem Fall die Adresse "erg" des Ergebnisregisters, sowie, in symbolischer Angabe, was in das Zielregister zu laden ist, nämlich der Inhalt des Registers R2. Die Auswahleinrichtung 14 ermittelt darauf wiederum die der logischen Adresse 23 R2 entsprechende physikalische Adresse 13 im Speicher 11, d.h. die Speicherzelle R5 und liest sodann deren Inhalt über den Datenbus 21 aus.

Ist die Programmfolge 29 abgearbeitet, kann unmittelbar erneut die Auslösung einer Zuordnungsverwürfelung durch die Verwürfelungseinrichtung 15, d.h. die Absetzung eines Startbefehles 26 vorgesehen sein. Selbst eine Mehrfachausführung derselben Programmfolge 28 ist dann mit einer regelmäßig wechselnden Belegung von Speicherzellen 10 im Speicher 11 verbunden. Alternativ kann ein erneuter Start der Verwürfelungseinrichtung 15 erst nach Durchführung mehrerer, etwa einer vorbestimmten Zahl von Programmfolgen 29 oder aber z.B. nur nach Neustart des Mikrocontrollers 25 vorgesehen sein.

Die Umsetzung der Erfindung ist unter Beibehaltung ihrer zugrundeliegenden Idee, nämlich die Zuordnung von physikalisch tatsächlich angesprochenen Adressen 13 im Speicher 11 zu in den Programmbefehlen verwendeten logischen Adressen 23 durch eine Verwürfelungseinrichtung unvorhersehbar zu machen, in einem weiten Rahmen variierbar. So kann ein anderer Speichertyp mit völlig anderer Gliederung gewählt werden oder die:Verwürfelung von Zuordnungen sich auf Gruppen von Speicherzellen 10 beziehen. Anstelle eines gesonderten Adreßbusses 20 kann zur Übermittlung der logischen Adressen 23 an die Auswahleinrichtung 14 ein anderes Verfahren gewählt werden. Zeitpunkt und Häufigkeit der Wiederholung der Verwürfelung durch die Verwürfelungseinrichtung 15 können ferner durch andere Ereignisse ausgelöst sein und auf andere Weise gesteuert werden. Anordnung wie Verfahren eignen sich des weiteren außer für die der Einfachheit halber zugrundegelegte serielle Befehlsabarbeitung in gleicher Weise etwa auch für nach objektorientierten Konzepten erstellte Programmbefehlsfolgen.

## Patentansprüche

1. Speicheranordnung mit einem Speicher mit einer Vielzahl von Speicherzellen (10) sowie einer Auswahleinrichtung (14), die aufgrund einer über einen Adreßbus (20) zugeführten logischen Adresse (23) eine Speicherzelle (10) auswählt, auf die anschließend ein physikalischer Zugriff erfolgt, wobei die Auswahleinrichtung (14) eine Verwürfelungsvorrichtung (15) beinhaltet, die, wenn eine Verwürfelung ausgelöst wurde, einer der Auswahleinrichtung (14) übermittelten logischen Adresse (23) eine Speicherzelle (10) zuordnet und der anschließende physikalische Zugriff auf die zugeordnete Speicherzelle (10) erfolgt, **dadurch gekennzeichnet, daß** die Verwürfelungsvorrichtung (15) die Zuordnung der logischen Adresse zu einer Speicherzelle (10) in unvorhersehbarerWeise vornimmt.

2. Speicheranordnung nach Anspruch 1, **dadurch gekennzeichnet, daß** die Auswahleinrichtung (14) einen Steuereingang (16) aufweist, über den die Verwürfelungsvorrichtung (15) startbar ist.

3. Speicheranordnung nach Anspruch 1, **dadurch gekennzeichnet, daß** die Auswahleinrichtung (14) eine durch einen Verwürfelungsvorgang vorgenommene Zuordnung während der Abarbeitung einer ein Programm bildenden Befehlsfolge (29) beibehält.

4. Speicheranordnung nach Anspruch 1, **dadurch gekennzeichnet, daß** die Verwürfelungseinrichtung (15) auf ein Startsignal (26) hin jeweils für alle Zellen (10) in einem Speicher (11) eine Zuordnung zu logischen Adressen (13) vornimmt.

5. Speicheranordnung nach Anspruch 1, **dadurch gekennzeichnet, daß** der Speicher (11) ein Speicher mit wahlfreiem Zugriff ist.

6. Speicheranordnung nach Anspruch 1, **dadurch gekennzeichnet, daß** der Speicher (11) ein flüchtiger Speicher ist.

7. Verfahren zum Speichern von Dateninhalten in einen Speicher (11), wobei der Speicher (11) in Speicherzellen (10) gegliedert ist und die zu speichernden Daten jeweils einen Dateninhalt sowie eine logische Adresse (23) zur Bezeichnung einer Speicherzelle (10) im Speicher (11) enthalten, wobei eine Verwürfelung ausgeführt wird, in der aus der logischen Adresse (23) durch Verwürfelung die Adresse (13) einer Speicherzelle (10) gewonnen und der Dateninhalt in dem Speicher (11) an der durch die Verwürfelung erzeugten Adresse (13) abgelegt wird, **dadurch gekennzeichnet, daß** die Verwürfelung regelmäßig oder auf den Eintritt bestimmter Ereignisse hin und in unvorhersehbarer Weise ausgeführt wird.

## Claims

1. A memory array with a memory with a plurality of storage cells (10) and a selection device (14) which selects a storage cell (10) due to a logical address (23) supplied via an address bus (20), said cell then being physically accessed, the selection device (14) comprising a scrambling device (15) which, when scrambling has been triggered, allocates a storage cell (10) to a logical address (23) transmitted to the selection device (14), and the allocated storage cell (10) then being physically accessed, **characterized in that** the scrambling device (15) performs the allocation of the logical address to a storage cell (10) in unpredictable fashion.

2. A memory array according to claim 1, **characterized in that** the selection device (14) has a control input (16) via which the scrambling device (15) can be started.

3. A memory array according to claim 1, **characterized in that** the selection device (14) retains an allocation performed by a scrambling process, during the execution of an instruction sequence (29) forming a program.

4. A memory array according to claim 1, **characterized in that** the scrambling device (15) performs an allocation to logical addresses (13) for all cells (10) in a memory (11) in response to a start signal (26) in each case.

5. A memory array according to claim 1, **characterized in that** the memory (11) is a random-access memory.

6. A memory array according to claim 1, **characterized in that** the memory (11) is a volatile memory.

7. A method for storing data contents in a memory (11), the memory (11) being divided into storage cells (10) and the data to be stored each containing a data content and a logical address (23) for designating a storage cell (10) in the memory (11), scrambling being performed in which the address (13) of a storage cell (10) is obtained from the logical address (23) by scrambling and the data content is stored in the memory (11) at the address (13) generated by the scrambling, **characterized in that** the scrambling is performed regularly or in response to the occurrence of certain events and in unpredictable fashion.

## Revendications

1. Dispositif à mémoire comportant une mémoire ayant une pluralité de cellules mémoire (10) ainsi qu'un dispositif de sélection (14) sélectionnant une cellule mémoire (10) d'après une adresse logique (23) fournie par un bus d'adresse (20), cellule mémoire sur laquelle ensuite se fait un accès physique, le dispositif de sélection (14) contenant un dispositif de hachage(15) qui, lorsqu'un embrouillage a été déclenché, associe une cellule mémoire (10) à une adresse logique (23) transmise au dispositif de sélection (14), et l'accès physique subséquent à la cellule mémoire (10) associée s'effectue, **caractérisé en ce que** le dispositif de hachage (15) effectue l'association de l'adresse logique à une cellule mémoire (10) d'une manière non prévisible.

2. Dispositif à mémoire selon la revendication 1, **caractérisé en ce que** le dispositif de sélection (14) présente une entrée de commande (16), par l'intermédiaire de laquelle le fonctionnement du dispositif de hachage (15) peut être lancé.

3. Dispositif à mémoire selon la revendication 1, **caractérisé en ce que** le dispositif de sélection (14) conserve en son sein une association, effectuée par un processus de hachage, pendant le traitement d'une suite d'ordres (29) formant un programme.

4. Dispositif à mémoire selon la revendication 1, **caractérisé en ce que** le dispositif de hachage (15) effectue, sur un signal de lancement (26), une association à des adresses logiques (13) chaque fois pour toutes les cellules (10) situées dans une mémoire (11).

5. Dispositif à mémoire selon la revendication 1, **caractérisé en ce que** la mémoire (11) est une mémoire à accès aléatoire.

6. Dispositif à mémoire selon la revendication 1, **caractérisé en ce que** la mémoire (11) est une mémoire volatile.

7. Procédé de mise en mémoire de contenu en données dans une mémoire (11), la mémoire (11) étant articulée en cellules mémoire (10) et les données à mémoriser contenant chacune un contenu en données, ainsi qu'une adresse logique (23) pour la désignation d'une cellule mémoire (10) dans la mémoire (11), un hachage étant effectué, dans lequel, à partir de l'adresse logique (23), par hachage, l'adresse (13) d'une cellule mémoire (10) est obtenue et le contenu en données étant placé dans la mémoire (11) à l'adresse (13) générée par le hachage, **caractérisé en ce que** le hachage est effectué régulièrement, ou suite à l'entrée d'événements ou occurrences déterminé(e)s et de manière imprévisible.
